# EUROPEAN PATENT SPECIFICATION

(11) **EP 0 482 412 B1**
(45) Date of publication and mention of the grant of the patent: **06.12.1995**
(21) Application number: 91117055.3
(22) Date of filing: 07.10.1991
(51) Int. Cl.: B24D 3/34, B24D 3/28

(54) **Abrasive product and method of its use**
Schleifmittel und Verfahren zu seiner Verwendung
Produit abrasif et méthode d'utilisation

(30) Priority: 22.10.1990 US 601632
(43) Date of publication of application: 29.04.1992
(73) Proprietor: NORTON COMPANY, Worcester, MA 01615-0008 (US)
(72) Inventor: Hickory, Gordon E., Rutland, MA 01543 (US); White, Michael J., Cumberland, RI 02864 (US)
(74) Representative: Diehl, Hermann O. Th., Dr.

(56) References cited:
- EP-A- 0 130 542
- EP-A- 0 375 803
- US-A- 3 942 959
- US-A- 4 475 926

## Description

The present invention is directed to an abrasive product and a method of its use.

It is known that grinding aids of various types may be used to improve the cutting efficiency of resin bonded abrasive grain in grinding wheels and coated abrasives. Various combinations of abrasive grain and active filler materials supported in a resin bond have been suggested for improving grinding action of abrasive products and certain combinations have been found to be especially useful for grinding and/or cutting ferrous materials. It is known that the grinding performance of resin bonded grinding wheels can be significantly improved when active fillers are employed. A good active filler can help remove metal more efficiently and reduce the amount of heat generated in the grinding process which results in a decrease in required grinding energy and an increase in grinding wheel life.

Resin bonded grinding wheels including combinations of alumina and other abrasive grains with finely divided fillers such as cryolite, pyrite or FeS₂, KAlF₄, K₃AlF₆, K₂SO₄,PbCl₂, PbO, Sb₂S₃ and mixtures of these materials are known and used commercially.

U.S. Patent No. 4,475,926 disclosures a resinoid bonded abrasive article in which the resinoid bond includes 5-80% by volume of an improved active filler. The active filler is a mixture of iron pyrites, potassium sulfate, and an alkali halo-ferrate. In column 1, the patent discloses examples of various known fillers used in grinding wheel formations.

U.S. Patent No. 2,258,774 discloses an organic bonded abrasive material containing certain low melting point metals such as lead, tin, bismuth, antimony, cadmium or alloys thereof. The metals are taught as being lubricants for the abrasive material.

It has been found that certain combinations of fillers provide superior grinding quality when used in mixtures. For example, a mixture of FeS₂ and K₂SO₄ produces a synergistic effect when used in a phenolic bonded cut-off wheel with an alumina abrasive. While grinding wheels containing a mixture of FeS₂ and K₂SO₄ generally perform better than other prior art grinding wheels for many applications, the FeS₂/K₂SO₄ wheel is relatively hard acting and burns the workpiece severly at moderate to low cutting rates.

An abrasive product, especially a grinding wheel which overcomes these problems is thus needed.

The invention provides an abrasive product according to independent claim 1 and a method for improving the grinding performance of an abrasive product according to independent claim 12. Further advantageous features, aspects and details of the invention are evident from the dependent claims, the description and the examples.

The invention also provides a grinding wheel abrasive composition.

According to the invention, there is provided a resin bonded abrasive material, particulary a phenolic resin bonded abrasive material containing active fillers which material is useful in forming an abrasive product such as a grinding wheel.

It has now been found that according to the present invention a combination of tin, FeS₂, and K₂SO₄ in a resin bonded abrasive grinding wheel results in an improvement in grinding efficiency and quality in relation to prior art materials, particularly those containing only a combination of FeS₂ and K₂SO₄ as active fillers. The active fillers are generally present in an amount of up to about 40% by volume of final abrasive product.

The resin bonded abrasive articles of the present invention generally comprise a polymeric bonding material such as an organic polymer, an abrasive, and an active filler system comprising a synergistic combination of tin, FeS₂ and K₂SO₄. The article may also contain conventional mixing aids such as liquid plasticizers.

Any suitable polymeric bonding material may be used, including simple and modified phenol-formaldehyde resins, epoxy resins, polyester resins, shellac, polyimide, and rubber. It is presently preferred to employ a phenolic resin. The organic polymer is generally present in an amount of from about 15% to 40%, more preferably in an amount of from about 18 to 30%, and most preferably from about 20 to 25%, by volume. It is important that the organic polymer content not be so low that the resulting abrasive product lacks sufficient strength for safe use.

The abrasive material which may be employed includes fused alumina, sintered alumina including such as those described in U.S. Patent Nos. 4,314,827 and 4,623,364, silicon carbide, garnet, flint, fused alumina-zirconia, diamond, and mixtures thereof. Other suitable abrasives may also be used. The abrasive is generally present in an amount of from about 30 to 60%, more preferably in an amount of from about 35 to 55%, and most preferably in an amount of from about 40 to 50% by volume.

The active filler system comprises a mixture of Sn (tin), FeS₂, and K₂SO₄. The total filler system is present in an amount of at least about 5 volume %, generally from about 5 to 40%, more preferably of from about 10 to 30%, and most preferably of from about 15 to 25%, by volume. The tin portion of the filler system may range from about 2 to 20 volume % of the abrasive article though more preferably it is used in an amount of from about 3 to 10 %. The FeS₂ is generally present in an amount of from about 2.5 to 10 % and more preferably in an amount of from about 4 to 9%. The K₂SO₄ component of the system generally ranges from about 2.5 to 10 % by volume of the abrasive article and more preferably of about 4 to 9%. Generally, the three components of the active filler system are used in ratios of tin:FeS₂:K₂SO₄ ranging from about 80:10:10 to 10:45:45.

Conventional mixing aids which may be used include liquid plasticizers such as tri-decylalcohol, chlorinated paraffins, and furfural. They are generally present in an amount of from about 1 to 10 % by volume of the total composition, preferably from about 2 to 6%. Any other ingredients conventionally incorporated into resin bonded abrasive products may also be incorporated into the products of this invention.

The abrasive articles will also contain porosity, generally up to about 15 volume %, preferably about 1-10 volume 5, and most preferably about 3-8 volume %.

An example of a preferred abrasive article according to the present invention contains about 45.6% abrasive; about 22.6 % organic polymer; about 4.6% liquid plasiticizers; and a filler system containing about 8.6% FeS₂, about 8.6% K₂SO₄, about 4.0% tin, and about 6% porosity.

The abrasive article of the present invention may be manufactured by any suitable process, although it is presently preferred to proceed as set forth hereinbelow. The organic polymer which is preferably a phenolic resin is used in both liquid and powder forms. The liquid resin is mixed with the tin and the abrasive while the dry powder resin is separately mixed with the other two components of the filler system. Then, the two mixtures are combined along with any liquid plasticizers or other ingredients by conventional means.

To form an abrasive article such as a grinding wheel, the resulting mixture is measured into a mold set up for pressing a cut off wheel, e.g. a steel mold approximately 16" x 1/8" x 1"* used at about 800 tons** of total force. The pressed wheel shape is then cured in an oven at a temperature of about 175°C. following conventional known resinoid bonded wheel manufacturing procedures.
* 1 inch = 2.54 cm
**1 ton = 907.19kg

In the following non-limiting examples, all parts and percents are by volume unless otherwise specified.

### Example I

A 16" x 1/8" x 1" cut-off wheel of the present invention is prepared from 48.2% of a 50:50 mixture of 24 and 30 grit alumina particles as the abrasive; 5.9% liquid phenolic resin; 17.9% powdered phenolic novolac resin; 3.8% of a liquid plasticizer mixture of tridecyl alcohol, chlorinated paraffin, and furfural; and 18.1 % active filler mixture of Sn:FeS₂:K₂SO₄ in a 2:1:1 ratio, i.e. about 9% tin and 4.5% each of FeS₂ and K₂SO₄, and 6.2% porosity. The tin is added to the alumina particles after they are mixed with the liquid resin and before a mixture of the other dry components are added. The mixture is measured into a steel mold of the appropriate size, subjected to about 800 tons total force, and then cured in an oven at 175°C. in a conventional manner for 34 hours. The wheel is referred to as Wheel I below.

### Comparative Example A

The basic procedure of Example I was repeated on a slightly different abrasive formulation with the primary change being the omission of the tin. The wheel contained 48.4% alumina, 5.4% liquid phenolic resin, 18.5% powdered phenolic resin, 3.5% plasticizer mixture, 18.2% active filler mixture, and 6% porosity. The FeS₂ and the K₂SO₄ were each used in an amount of 9.1%. The wheel is referred to as Wheel A below.

### Comparative Example B

The basic procedure of Example I was repeated except that the FeS₂ and the K₂SO₄ were omitted from the formulation. The specific wheel contained 48.1% alumina, 5.9% liquid phenolic resin, 17.8% powdered phenolic resin, 4.1% plasticizer mixture, 18.1% tin, and 6% porosity. The wheel is referred to as Wheel B below.

### Example II

A variation of the procedure of Example I is used to produce another wheel containing the three active fillers, but having a reduced level of tin concentrated at the interface between the abrasive and the bond. To accomplish this, the tin (4%) is coated onto 45.6% alumina particles by first mixing the alumina particles with the liquid phenolic resin and then mixing in the tin to form a homogenous mix. The tin-coated abrasive is then processed as in Example I along with 22.5% total phenolic resin, 4.6% of the liquid plasticizer mixture, and 8.6% of each of the FeS₂ and the K₂SO₄. The total active filler content is increased to 21.2% but the level of tin is reduced to 4%. The wheel which contains 6% porosity is referred to as Wheel II below.

### Example III

The four wheels produced above are used for cutting metal and for this purpose are mounted on a Stone M150 hydraulic cut-off machine and are tested cutting 1.5" diameter C1018 cold rolled steel bars. Thirty test runs are made at each of 2.5, 3.5, and 4.5 seconds to complete the cut through the bar at a wheel speed of 12,000 sfpm**. The results are shown in Table I wherein MRR is the metal removal rate in cubic inches per minute*, E is the grinding power in kilowatts, G-Ratio is the ratio of volume of metal removed to volume of wheel worn away, E/MRR is the specific grinding energy, and % Burn is the percent workpiece that is burned:

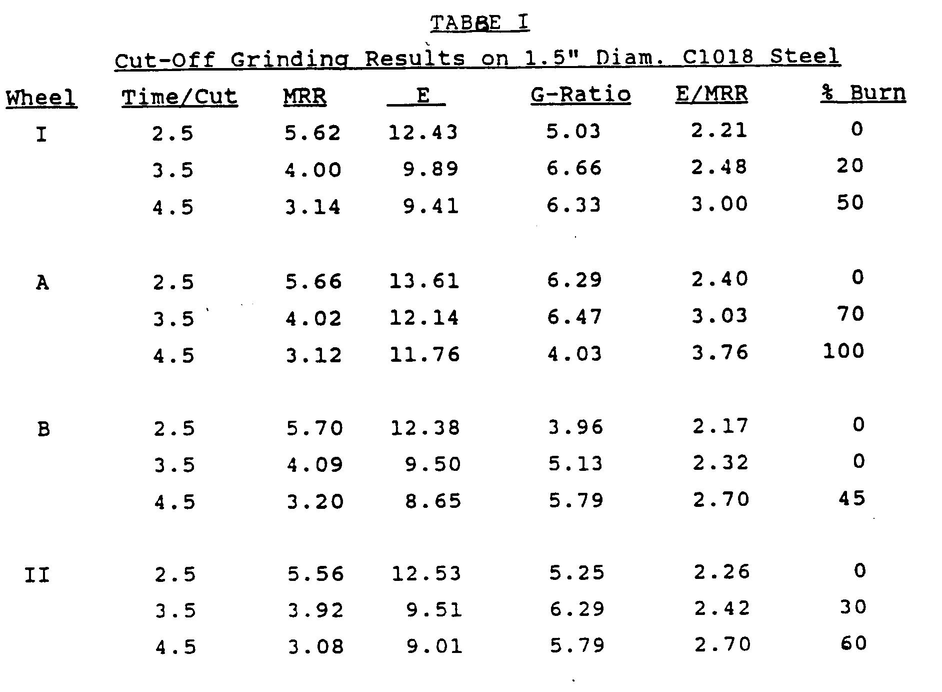

** 1 ft/min. = .305 meters per min.
* 1 cu. inch = 16.39 cu. cm

The results in Table I demonstrate that the addition of tin as a co-active filler in Wheels I and II to a mixture of FeS₂ and K₂SO₄ produces an improved grinding wheel, particularly at moderate to low cutting rates.

Wheel A with the FeS₂ and K₂SO₄ mixture is hard acting, burning the workpiece severely at both moderate and low cutting rates.

And when the FeS₂ and K₂SO₄ mixture in Wheel A is replaced by tin as in in Wheel B, the wheel becomes very soft, is much freer cutting, and only burns the workpiece slightly at the lowest cut-rate. The versatility of the tin-filled phenolic wheel is obviously much greater than the mixture of FeS₂ and K₂SO₄, but this occurs at a major loss in wheel life and a high wheel manufacturing cost due to the presence of 18 volume % tin in the wheel. Tin has a very high density (7.3 g/cc) and is a costly (currently $6.50/lb.) material.

However, when tin is used in combination with the FeS₂ and K₂SO₄ as in Wheel I, there is an increased wheel life compared to Wheel B (tin only) as well as a general improvement in versatility and grinding quality over Wheel A (no tin). And when the amount of tin is reduced to only 4% in Wheel II to reduce the cost of the wheel and much of the tin is placed at the interface between the abrasive and the bond, a lower wheel cost is achieved at essentially no difference in performance. A comparison of the performances of Wheels I and II shows little difference even though I has 9% tin and II only 4%.

### EXAMPLE IV

The procedure of Example I was repeated to produce three different wheels. Wheel IV was made as in Example I. Wheel A was made as in Comparative Example A with a mixture of FeS₂ and K₂SO₄. Wheel A-2 was made of the same composition as A but was oven cured at a temperature of only 160°C. to produce a softer grinding grade version of the prior art wheel. The results of sixty cuts at each cutting rate are shown in Table II.

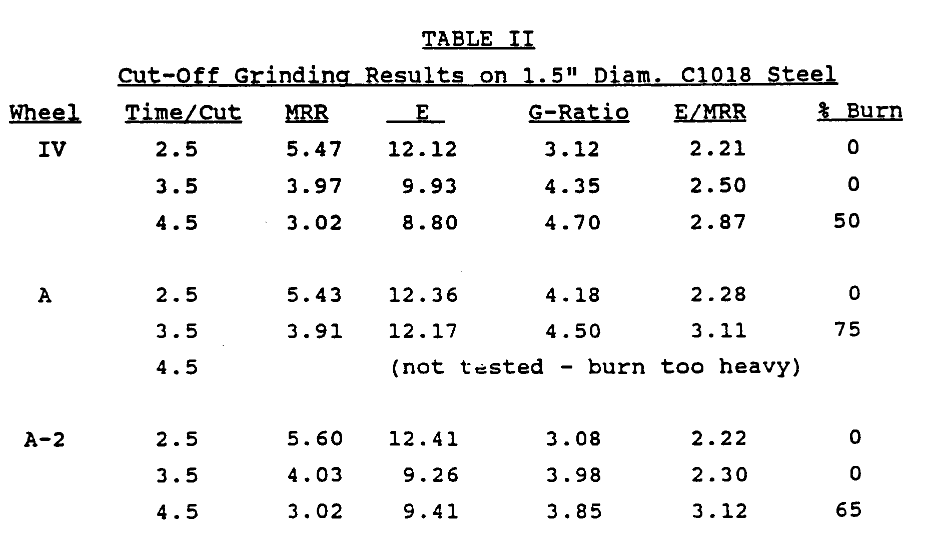

Table II shows that Wheel IV of this invention performs with equal durability (G-ratio) at high cut rate as the softer version of Wheel A, i.e. Wheel A-2, but that at lower cut-rates it is substantially freer cutting and as a result achieves significantly higher wheel life and also a lower level of burn.

## Claims

1. An abrasive product comprising an abrasive material, active fillers, and an organic polymer for bonding the abrasive and the active fillers together to form the abrasive product, the active fillers comprising a combination of tin, FeS₂, and K₂SO₄.

2. The abrasive product of Claim 1, wherein the active fillers are present in an amount of from 5 to 40% by volume of the abrasive product, preferably in an amount of from 10 to 30% by volume of the abrasive product.

3. The abrasive product of Claim 1 or 2, wherein the tin is present in an amount of from 2 to 20% by volume of the abrasive product.

4. The abrasive product of one of the preceding claims, wherein the organic polymer comprises a phenolic resin.

5. The abrasive product of one of the preceding claims, wherein the abrasive is selected from the group consisting of fused alumina, sintered alumina, silicon carbide, garnet, flint, fused alumina-zirconia, diamond, and mixtures thereof.

6. The abrasive product of one of the preceding claims, wherein the abrasive comprises alumina.

7. The abrasive product of one of the preceding claims, wherein the tin is coated on the surfaces of the abrasive.

8. The abrasive product of one of the preceding claims, wherein the volume ration of tin:FeS₂:K₂SO₄ is from about 10:45:45 to about 80:10:10.

9. The abrasive product of one of the preceding claims further containing a liquid plasticizer.

10. The abrasive product of one of the preceding claims, wherein the abrasive product is a grinding wheel.

11. The abrasive product of one of claims 1 to 9, wherein the abrasive product is a coated abrasive product.

12. A method of improving the grinding performance of an abrasive product comprising an abrasive material, active fillers consisting of a mixture of FeS₂ and K₂SO₄, and an organic polymer, the method comprising further incorporating tin as an active filler.

13. The method of claim 12, wherein the tin is present in an amount of from 2 to 20% by volume of the abrasive product.

14. The method of claim 12 or 13, wherein the volume ratio of tin:FeS₂:K₂SO₄ is from about 10:45:45 to about 80:10:10.

## Patentansprüche

1. Schleifprodukt mit einem Schleifmaterial, aktiven Füllstoffen und einem organischen Polymer zur Verbindung des Schleifmittels mit den aktiven Füllstoffen, um das Schleifprodukt zu bilden, wobei die aktiven Füllstoffe eine Kombination aus Zinn, FeS₂ und K₂SO₄ enthalten.

2. Schleifprodukt gemäß Anspruch 1, bei dem die aktiven Füllstoffe in einer Menge von 5 bis 40 Vol% des Schleifprodukts vorliegen, vorzugsweise in einer Menge von 10 bis 30 Vol% des Schleifprodukts.

3. Schleifprodukt gemäß Anspruch 1 oder 2, bei dem das Zinn in einer Menge von 2 bis 20 Vol% des Schleifprodukts vorliegt.

4. Schleifprodukt gemäß einem der vorhergehenden Ansprüche, bei dem das organische Polymer ein Phenolharz enthält.

5. Schleifprodukt gemäß einem der vorhergehenden Ansprüche, bei dem das Schleifmittel aus der Gruppe bestehend aus geschmolzenem Aluminiumoxid, gesintertem Aluminiumoxid, Siliciumcarbid, Granat, Flint, geschmolzenem Aluminiumoxid-Zirconiumoxid, Diamant und Mischungen davon ausgewählt ist.

6. Schleifprodukt gemäß einem der vorhergehenden Ansprüche, bei dem das Schleifmittel Aluminiumoxid enthält.

7. Schleifprodukt gemäß einem der vorhergehenden Ansprüche, bei dem eine Beschichtung des Zinns auf die Oberflächen des Schleifmittels aufgetragen ist.

8. Schleifprodukt gemäß einem der vorhergehenden Ansprüche, bei dem das Volumenverhältnis von Zinn:FeS₂:K₂SO₄ 10:45:45 bis etwa 80:10:10 beträgt.

9. Schleifprodukt gemäß einem der vorhergehenden Ansprüche, das des weiteren einen Flüssigweichmacher enthält.

10. Schleifprodukt gemäß einem der vorhergehenden Ansprüche, bei dem das Schleifprodukt eine Schleifscheibe ist.

11. Schleifprodukt gemäß einem der Ansprüche 1 bis 9, bei dem das Schleifprodukt ein beschichtetes Schleifprodukt ist.

12. Verfahren zur Verbesserung der Schleifleistung eines Schleifprodukts mit einem Schleifmaterial, aktiven Füllstoffen bestehend aus einer Mischung aus FeS₂ und K₂SO₄ und einem organischen Polymer, wobei das Verfahren das weitere Einbringen von Zinn als aktiven Füllstoff umfaßt.

13. Verfahren gemäß Anspruch 12, bei dem das Zinn in einer Menge von 2 bis 20 Vol% des Schleifprodukts vorliegt.

14. Verfahren gemäß Anspruch 12 oder 13, bei dem das Volumenverhältnis von Zinn:FeS₂:K₂SO₄ 10:45:45 bis etwa 80:10:10 beträgt.

## Revendications

1. Produit abrasif comprenant un matériau abrasif, des charges actives et un polymère organique pour lier l'abrasif et les charges actives ensemble afin de former le produit abrasif, les charges actives consistant en une combinaison d'étain, de FeS₂ et de K₂SO₄.

2. Produit abrasif selon la revendication 1, caractérisé en ce que les charges actives sont présentes en une quantité qui va de 5 à 40% en volume du produit abrasif, de préférence en une quantité qui va de 10 à 30% en volume du produit abrasif.

3. Produit abrasif selon la revendication 1 ou 2, caractérisé en ce que l'étain est présent en une quantité qui va de 2 à 20% en volume du produit abrasif.

4. Produit abrasif selon l'une des revendications précédentes, caractérisé en ce que le polymère organique est constitué d'une résine phénolique.

5. Produit abrasif selon l'une des revendications précédentes, caractérisé en ce que l'abrasif est choisi dans le groupe consistant en l'alumine fondue, l'alumine frittée, le carbure de silicium, le grenat, le silex, l'alumine-zircone fondue, le diamant et leurs mélanges.

6. Produit abrasif selon l'une des revendications précédentes, caractérisé en ce que l'abrasif est constitué d'alumine.

7. Produit abrasif selon l'une des revendications précédentes, caractérisé en ce que l'étain est appliqué sur les surfaces de l'abrasif.

8. Produit abrasif selon l'une des revendications précédentes, caractérisé en ce que le rapport volumique étain:FeS₂:K₂SO₄ va d'environ 10:45:45 à environ 80:10:10.

9. Produit abrasif selon l'une des revendications précédentes, renfermant en outre un plastifiant liquide.

10. Produit abrasif selon l'une des revendications précédentes, caractérisé en ce que le produit abrasif est une meule.

11. Produit abrasif selon l'une des revendications 1 à 9, caractérisé en ce que le produit abrasif est un produit abrasif appliqué.

12. Procédé pour améliorer la performance de meulage d'un produit abrasif comprenant un matériau abrasif, des charges actives consistant en un mélange de FeS₂ et de K₂SO₄, et un polymère organique, le procédé consistant à incorporer en outre de l'étain comme charge active.

13. Procédé selon la revendication 12, caractérisé en ce que l'étain est présent en une quantité qui va de 2 à 20% en volume du produit abrasif.

14. Procédé selon la revendication 12 ou 13, caractérisé en ce que le rapport volumique étain:FeS₂:K₂SO₄ va d'environ 10:45:45 à environ 80:10:10.
